# EUROPEAN PATENT APPLICATION

(11) **EP 3 012 745 A1**
(43) Date of publication of application: **27.04.2016**
(21) Application number: 14425135.2
(22) Date of filing: 23.10.2014
(51) Int. Cl.: G06F 17/30, G06Q 10/00, G06Q 50/00

(54) **Chorally platform for digital caring and social CRM**

(71) Applicant: Welike CRM S.r.l., 20156 Milano (IT)
(72) Inventor: Welike CRM S.r.l., 20156 Milano (IT)

(57) **Abstract**

This document contains the international patent registration request of a software plaftorm named "Chorally".

Chorally is an engagement platform for the age of data: empowerment is a question of access to information.

Employees and customers expect and deserve easy access to the data and services they need. By leveraging open APIs and data science Chorally offers users a world without the needless boundaries the pre-internet era left us with.

Based on the unified view of data offered by the integration hub, the Chorally data engine utilizes analysis frameworks and machine learning in order to automate case management, bringing customer issues in front of the right employee, in the right way, at the right time. Similarly it brings companies' issues in front of the right customer.

The Chorally platform is a "software as a service" (SAAS) solution based on APIs able to connect to social channels, email channels or istant messaging channels. It has a responsive interface that can be used from PCs and mobile devices.

## Description

The future of customer/citizen engagement is the integration of structured and unstructured, public and private data. Chorally is an engagement platform for employees and customers/citizens that works across different channels, integrating and leveraging big data.

Our software platform allows any employee of any entity to effectively engage with any customer/citizen across any channel: social media, chat, email or mobile applications through one unified solution able to manage historical data and make those available for further reuse. Using machine learning Chorally makes sense of big data, simplifying, accelerating and automating processes where possible, and providing relevant information where relevant.

Moving beyond marketing and customer service, our data engine engages customers as well as employees in sharing relevant ideas, solutions and stories, creating a real community among customers and citizens, companies and government agencies. Most companies also suffer from tools fragmentation: many functions and business areas use different tools to manage and/or to integrate the same data, so our goal is to build a unified integration hub. With the Chorally platform we developed a language and device independent data and information management solution.

The Chorally platform is available in SaaS (*Software* As A *Service*) mode. The system can be reached through https protocol (http over ssl).

The following (Fig. n. 1) image shows the **architectural scheme** of the platform.

The platform has a set of complete API which allows:
- users to use the platform by web and mobile devices
- to integrate the platform with third parties systems without any problems

The platform can be configured to provide the necessary workflow, routing and alerting functions in order to work in a **shared environment.**

Labels, prioritization rules, classification criteria and user interface language can be customized according to customer needs.

The platform includes **following components;** every component can be used independently from each others (Fig. n. 2):
➢ **Listener** - Listening from social channels (official and not official) and discussions on web/forums:
➢ **Scoring -** questions/users Classification (language independent), Sources/Questions/users Ranking, Expert Ranking, Influencers Detection
➢ **Workflow & Collaboration -** Management of users, state of questions, rules, knowledge base, alerting and communications
➢ **Engagement** - system for question forwarding on social channels.
➢ **Reporting** - for the reporting management on users, discussions, crossing burden and timing
➢ **Campaign Manager** - for the campaign management based on the generated list by the Scoring component.
➢ **Advocacy and Gamification** - for the management of customer and employees advocacy programs and business games

The platform's **distinctive characteristics** are described in the following paragraphs.

### Digital Channels supported

The platform manages following Sources:
- **Twitter**
- **Facebook**
- **G+**
- **Linkedin**
- **Email**
- **Istant Messaging Tools**
- **Blogs**
- **Forums**

It is possible the integration with the monitoring data coming from sector forums (also in order to check trends). Of course, it is also possible use this tool to manage emails.

The following Figure shows an Example of Ticket Inbox:

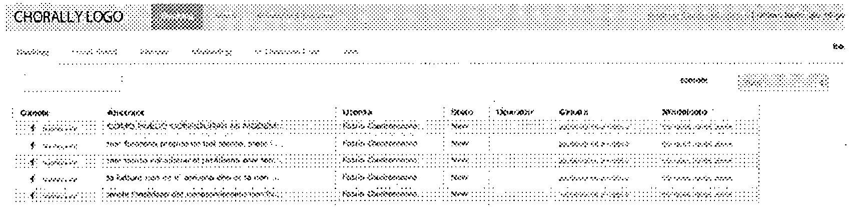

The following Figure shows an Example of Ticket detail:

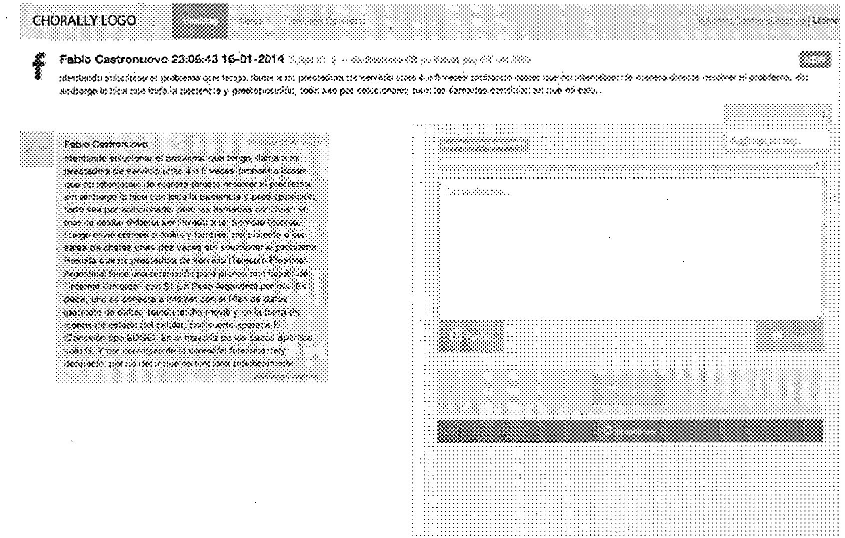

Figure n. 3 and figure n. 4 presents the graphical design of the Chorally user interface

### Statistical Routing

Through a statistical algorithm, the Chorally platform is able to categorize incoming posts in accordance with the most suitable criteria and business needs (Spam, Marketing, Complaints, Dangerous Comments, etc....). Based on the statistical routing model it is also possible to configure a differential workflow for each type of message. The classification engine is language independent since it's based on statistical patterns mining and definition.

### The Chorally Statistical Model for classifying data

Here is explained how to create a basic analysis model in order to train Chorally Platform. Let's suppose that we need to detect sentiment in order to dispatch only negative topics to a team. The example is in English but it's also valid in any other language, since the algorithm is language independent.

A sentiment analysis model is used to analyze a text string and classify it with one of the labels that you provide; for example, you could analyze a tweet to determine whether it is positive or negative, or analyze an email to determine whether it is happy, frustrated, or sad.

### Step 1: Collect Data

You must train your sentiment model against examples of the type of data that you are going to see when you use your model. For example, if you are trying to determine the sentiment of tweets, you will need to obtain examples of tweet entries, if you are going to analyze facebook or emails you will need examples from those channels. Of course these channels can be mixed up together in case of a multichannel strategy. For example:
"Feeling kind of low...."
"OMG! Just had a fabulous day!"
"Eating eggplant. Why bother?"

You can either provide your own data or use a general model, in case of a strong personalization of the process it would be better to use your own data to train the model.

For a good model, you will need at least several hundred examples, if not thousands.in case of more than 5 categories. All of the samples should be in the same language (though it doesn't matter what language, as long as its consistent and space-delimited).

### Step 2: Label Your Data

Once you have collected your training samples, you will need to pre-classify each sample with a label. A label is a string that you think best describes that example, for example: "happy", "sad", "on the fence". So, to assign labels to the previous examples:
"sad", "Feeling kind of low...."
"excited", "OMG! Just had a fabulous day!"
"bored", "Eating eggplant. Why bother?"

A few tips about labels:
- You can have up to 1,000 labels for a model, but you should only use as many labels as are useful to you, and you must have at least a few dozen examples assigned each type of label that you assign.
- Labels are just strings, so they can have spaces. However, you should put double quotes around any labels that have spaces, and you should escape any nested quotation marks using a \ mark. Example: "that\'s fine"
- Labels are case-sensitive. So "Happy" and "happy" will be seen as two separate labels by the training system. Best practice is to use lowercase for all labels, to avoid mix-ups.
- Each line can only have one label assigned, but you can apply multiple labels to one example by repeating an example and applying different labels to each one. For example:
   "excited", "OMG! Just had a fabulous day!"
   "annoying"
   "OMG! Just had a fabulous day!"

### Step 3: Prepare Your Data

The Chorally platform training data formatted as a comma-separated values (CSV) file with one row per example. The format of this file is basically this:

| |
|---|
| label1, feature1, feature2, feature3,.... |
| label2, feature1, feature2, feature3.... ... |

In the previous example, each example had a single feature: a text string that is a tweet. So the file would look something like this:

| |
|---|
| "sad", Feeling kind of low...." "excited", |
| "OMG! Just had a fabulous day!" "bored", |
| "Eating eggplant. Why bother?" |

However, if you have more data that you think would help find some underlying patterns, it would be useful to include that information as well. For example, if you think that message length is meaningful (longer messages indicate happier tweets) or time of day (daytime tweets are happier than nighttime tweets), you could create additional features for that data. The following example shows the label, tweet text, message word count, and numeric version of the time of day for each tweet:

| |
|---|
| "sad", "Feeling kind of low....", 4, 18.30 "excited", |
| "OMG! Just had a fabulous day!", 6, 9.10 "bored", |
| "Eating eggplant. Why bother?", 4, 12.00 |

### BlackList, Whitelist

There are whitelist and blacklist mechanisms: in this way some users can be **blocked** (eg spammer etc...) or **important** customers can be assigned to a "VIP" group or can be managed by specific workflows.

### Workflow

Workflows are **configurable,** with settable automatisms (e.g. if after x hours a ticket will be without answer, assign the ticket to another agent or group). Furthermore is guaranteed the possibility of setting different access levels for groups (e.g. outsourcer) on workflows activities and is also possible to manage different **access levels.**

### Scheduling and predefined answers

Possibility of choosing in a repository of **predefined answers.** Thank to the statistical engine it is possible that the engine **suggests** to the operator the most probable answers (google engine). Possibility for specific profiles to schedule contents to be published on official channels.

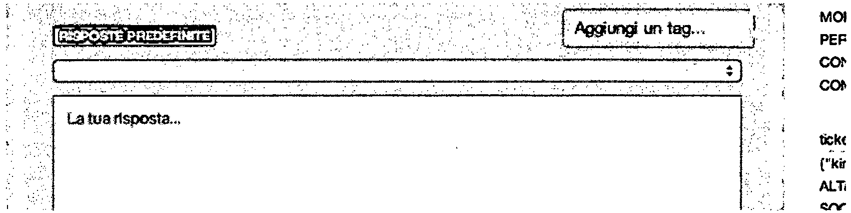

### Complete research engine on customer base and/or tickets' text

It is possible to perform **advanced searches** on customer base and/or on tickets' text

### Not-Structured Data Analysis

It is possible to make **specific analysis** on not-structured Data, for example to have immediately sentiment reports regarding mentions, subdivided also by types (e.g. sentiment on the web reputation or about mobile access functionalities)

### Mobile App for Customers

Possibility of creating a web **app** which allows the customers to get registered and to have in one panel all **social notes sent** on facebook and twitter with the corresponding **answers.** This app can also be integrated in Facebook tab.

The app is "responsive", and therefore it can be integrated with android, IOS, blackberry and windows mobile systems. As a consequence the customers can access to the social notes by mobile devices, and this app could be integrated with the company official app for a better **customer experience.**

### Reports and Structured data

It is available a specific **Reporting Panel** and it will be possible also to download data in CSV files.

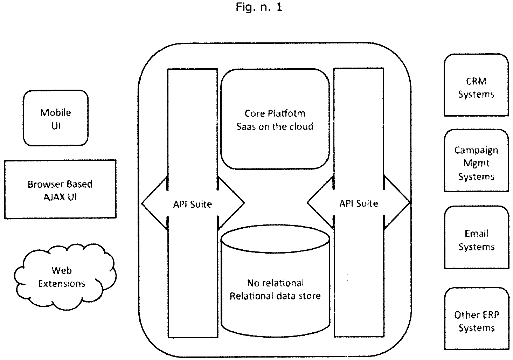

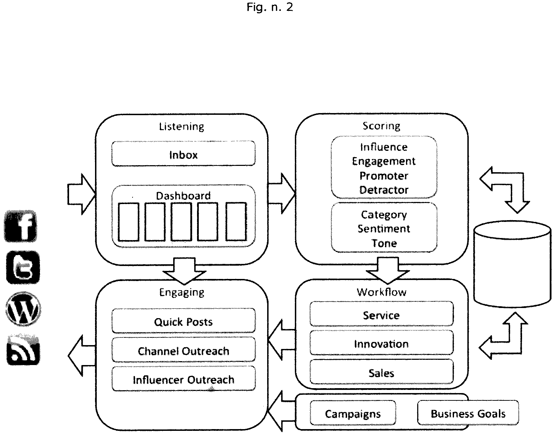

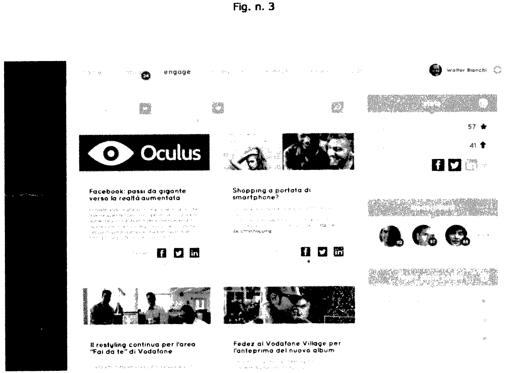

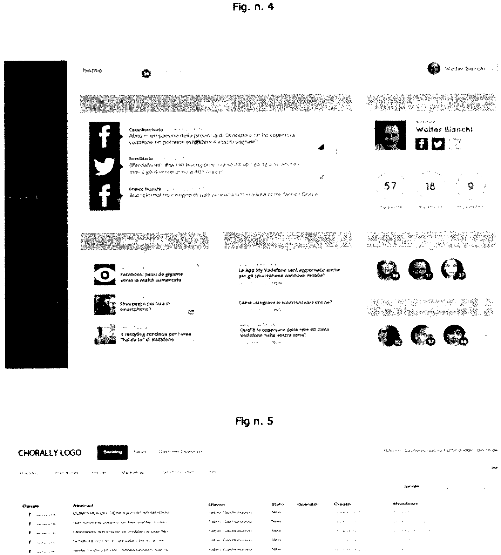

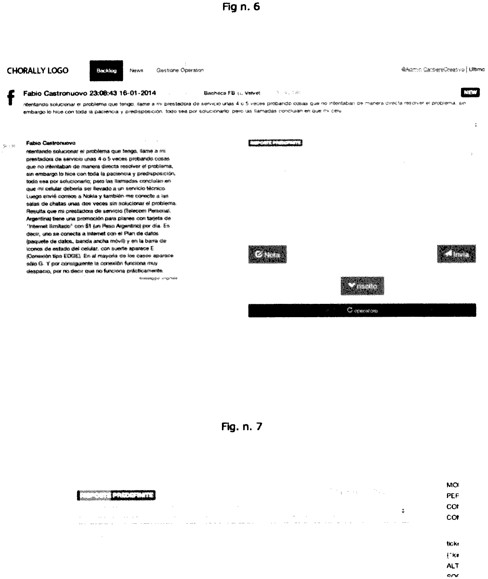

## Claims

1. Unique classification model based on **statistical patterns.** The Chorally platform is based on a statistical search engine able customized to classify contents and data coming from different textual and/or numeric sources.

2. Customizable **classification rules.** Classification rules can be customized according to customers' needs and business drivers. It means that all the contents coming into the Chorally platform can be classified according to different criteria.

3. **Priority-based routing system.** The workflow associated to any content and the dispatching tasks can be based on a priority system defined together with the customer in the configuration process. Priorities can be changed according to customer needs or to business practices automatically detected.

4. **Self-learning and predictive models.** The automatic detection of the activities of classification and prioritization generates a process of self-learning able to reduce the possibility of categorization errors and to estimate the incoming volumes for each category.

5. **Horizontal Tab view** permitting to add categories and filters. Workflows and contents can be presented in a "horizontal tab view" permitting to filter contents by category, subject, source, department, process phase, priority, business relevance...

6. **Data management for structured and non-structured** data. Big data processing tool to manage non-relational and relational data and information, even non-structured data coming from social network and web 2.0 sources such as forum blogs and newsgroups. The Chorally platform is able to manage interaction data, social data and behavioral data.

7. **Labeling features to tag data with specific metadata,** attributes or internal notes. All the Chorally contents can be labeled and tagged according to business rules and customer needs in order to enrich each content of more specific attributes. This feature is designed to support the workflow and to enlarge the dispatching task with additional information helping to work on a specific content.

8. **E-Mail connectors** to integrate contents coming from email management tools.

9. **Application Programming Interfaces to integrate external tools** such as chat, forum, virtual agents, search engines and to interact with legacy systems such as CRM suites, business intelligence tools, databases, workflow management system tools.

10. **Responsive User Interface** for PC and Mobile devices.

11. **Real-time monitoring features** to feed into the Chorally platform real time contents with a delay of 5 to 10 seconds.
